# FASCICULE DE BREVET EUROPEEN

(11) **EP 1 714 088 B1**
(45) Date de publication et mention de la délivrance du brevet: **29.11.2017**
(21) Numéro de dépôt: 05717427.8
(22) Date de dépôt: 17.01.2005
(51) Int. Cl.: F24F 9/00, F24F 3/16, B01D 46/52

(54) **DIFFUSEUR À EFFET PARIÉTAL**
UMFANGSDIFFUSOR
PERIPHERIAL DIFFUSER

(30) Priorité: 22.01.2004 FR 0400578
(43) Date de publication de la demande: 25.10.2006
(73) Titulaire: AXIMA CONCEPT, 92059 PARIS LA DEFENSE CEDEX (FR)
(72) Inventeur: BRIDENNE, Pierre, F-91470 Forges les Bains (FR); COFFINIER, Pascale, F-91510 Lardy (FR)
(74) Mandataire: Pontet Allano & Associes
(86) Numéro de dépôt international: PCT/FR2005/000095
(87) Numéro de publication internationale: WO 2005/080883

(56) Documents cités:
- EP-A- 1 108 961
- FR-A- 2 748 048
- GB-A- 2 092 296
- US-A- 3 998 142
- US-A- 4 412 849
- US-B2- 6 334 812

## Description

La présente invention se rapporte au domaine des diffuseurs, notamment aux diffuseurs d'air traité utilisés pour protéger des zones sensibles, particulièrement dans les industries pharmaceutiques ou électroniques, notamment dans les enceintes ou hottes à flux laminaires.

Il existe des diffuseurs d'air sous la forme de parois diffusantes. De telles parois sont généralement constituées de plusieurs caissons constituant chacun un filtre à plis, la filtration étant plus ou moins absolue. Ces parois filtrantes sont aussi quelquefois conçues pour diffuser un flux laminaire. Dans tous les cas, les flux doivent être protégés par des parois latérales, tant pour éviter leur contamination par des poussières et/ou des micro-organismes, que pour en protéger la laminarité. De ce fait de telles parois diffusantes prennent souvent la forme d'un plafond diffusant occupant, par exemple, toute la surface d'un plafond d'une salle dite blanche. Les murs de la salle font alors fonction de parois latérales pour le diffuseur.

Les documents GB 2 092 296 et US 4 412 846 décrivent chacun un diffuseur d'un flux gazeux, comprenant une paroi de diffusion formant des plis formés d'ondes et séparés par des écarteurs.

Le document, EP 1 108 961 décrit un diffuseur d'un flux gazeux, comprenant un système de lames 21, 22 de bras 24, 25 est d'écrous 26, 27, notamment pour produire un flux latéral accéléré dans zone latérale.

Le but de l'invention est de proposer un diffuseur permettant de s'affranchir au moins partiellement de parois latérales, particulièrement s'il n'est pas utile de protéger toute une salle, et permettant en outre un accès libre à une zone protégée depuis une zone non protégée.

L'invention concerne un diffuseur d'un flux gazeux selon une direction principale, ledit flux gazeux comprenant un flux principal avant une vitesse principale, et à la periphérie du flux principal, un flux latéral ayant une vitesse périphérique supérieure à la vitesse principale, ledit diffuseur comprenant au moins deux paires de surfaces en vis à vis, une partie du flux étant, diffusé entre les deux surfaces d'une paire, lesdites surfaces s'étendent principalement selon la direction principale , caractérisé en ce que certaines au moins des surfaces sont des surfaces aval d'une paroi de diffusion au travers de laquelle est émise une partie respective du flux gazeux, ladite paroi formant des plis, la direction principale étant sensiblement parallèle à une médiane des plis, la zone d'émission du flux principal comprenant plusieurs plis, lesdits plis avant un pas et une profondeur constante, les plis ayant dans la zone d'émission du flux latéral un pas plus petit que dans la zone d'émission du flux principal, mes plis étant formés de plans séparés de pliures.

Le flux latéral crée ainsi, du simple fait du diffuseur, une protection pour le flux principal, d'un effet similaire à celui d'une paroi solide. Il n'est donc plus nécessaire de disposer d'une paroi solide à cet endroit. En outre, le flux latéral peut être traversé, par exemple par une personne ou un objet devant accéder à une zone protégée par le flux gazeux, sans que le flux latéral en soit notablement perturbé.

La paroi de diffusion peut avantageusement avoir une porosité constante. Ainsi, particulièrement si cette paroi est filtrante, particulièrement si elle constitue un filtre absolu, notamment un filtre dit filtre à petits plis ou un filtre absolu à plis profonds. La filtration est ainsi homogène sur toute la surface de la paroi.

La paroi de diffusion peut aussi être une tôle perforée, ou d'un autre type de parois permettant la diffusion.

Dans la zone d'émission du flux principal, les plis ont un pas et une profondeur constante. Ainsi, le flux principal est homogène.

Afin d'augmenter la surface de la paroi de diffusion pour une section transversale donnée du flux latéral, les plis ont un pas plus petit que dans la zone d'émission du flux principal. Ainsi, le débit, donc la vitesse, du flux latéral dans cette section est augmenté en proportion.

Notamment si le flux principal est sensiblement laminaire, et pour ne pas y provoquer de turbulences induites, avantageusement, le pas des plis diminue, et/ou la profondeur des plis augmente, progressivement dans la zone d'émission du flux latéral à partir de leur valeur dans la zone d'émission du flux principal, à mesure où l'on s'éloigne de ladite zone d'émission du flux principal. Ainsi, la valeur de la vitesse dans le flux latéral augmente progressivement à partir de sa valeur dans le flux principal à mesure où l'on s'éloigne du flux principal.

Le diffuseur peut être constitué de modules élémentaires, ayant notamment la forme de caissons, des premiers modules pouvant être assemblés pour former une zone de diffusion du flux principal, des deuxièmes modules pouvant être assemblés pour former en périphérie des premiers, une zone de diffusion du flux d'air latéral. Cette disposition permet de réaliser un diffuseur de grandes dimensions à l'aide de module aisément manipulables. Chaque module peut avoir des caractéristiques constantes, notamment un pas ou une profondeur constante, ou au moins une caractéristique variable, notamment un pas ou une profondeur variable.

Le diffuseur peut être adapté pour diffuser un flux sensiblement laminaire, au moins à une certaine distance à partir dudit diffuseur, par exemple un flux principal sensiblement laminaire. Un tel flux est particulièrement recherché dans les industries pharmaceutiques ou électroniques, pour lesquelles on recherche une atmosphère contrôlée, exempte de turbulences.

D'autres particularités et avantages de l'invention ressortiront encore de la description ci-après, relative à des exemples non limitatifs.

Aux dessins annexés :
- la figure 1 est une vue en coupe, schématique et partielle d'un premier mode de réalisation selon l'invention dans lequel le diffuseur comprend plusieurs caissons, dont deux sont représentés, chacun constituant un module d'un filtre à plis d'un pas fixe ;
- la figure 2 est une vue en coupe, schématique et partielle d'un deuxième mode de réalisation selon l'invention dans lequel le diffuseur comprend plusieurs caissons, dont deux sont représentés, l'un constituant un module d'un filtre à plis d'un pas fixe, l'autre un module d'un filtre à plis d'un pas variable ;
- la figure 3 est une vue en coupe, schématique et partielle d'un troisième mode de réalisation selon l'invention dans lequel le diffuseur comprend au moins un caisson constituant un module d'un filtre à plis dont une zone centrale a un pas fixe, et deux zones latérales ont un pas variable ;
- la figure 4 est une vue en coupe, schématique et partielle d'un quatrième mode de réalisation pas selon l'invention dans lequel le diffuseur comprend au moins un caisson constituant un module d'un échangeur à ailettes dont une zone centrale a un pas fixe, et deux zones latérales ont un pas variable ;
- la figure 5 est une vue en coupe schématique simplifiée, d'un cinquième mode de réalisation pas selon l'invention pour une paroi diffusante dont une zone centrale est plane et une zone principale comprend plusieurs plis de profondeur variable ;
- la figure 6 est une vue en coupe schématique simplifiée, d'un sixième mode de réalisation pas selon l'invention pour une paroi diffusante dont une zone principale est plane et une zone latérale comprend un seul pli ; et,
- la figure 7 est une vue en coupe schématique simplifiée, d'un septième mode de réalisation pas selon l'invention pour une paroi diffusante dont une zone principale est plane et une zone latérale comprend une seule onde.

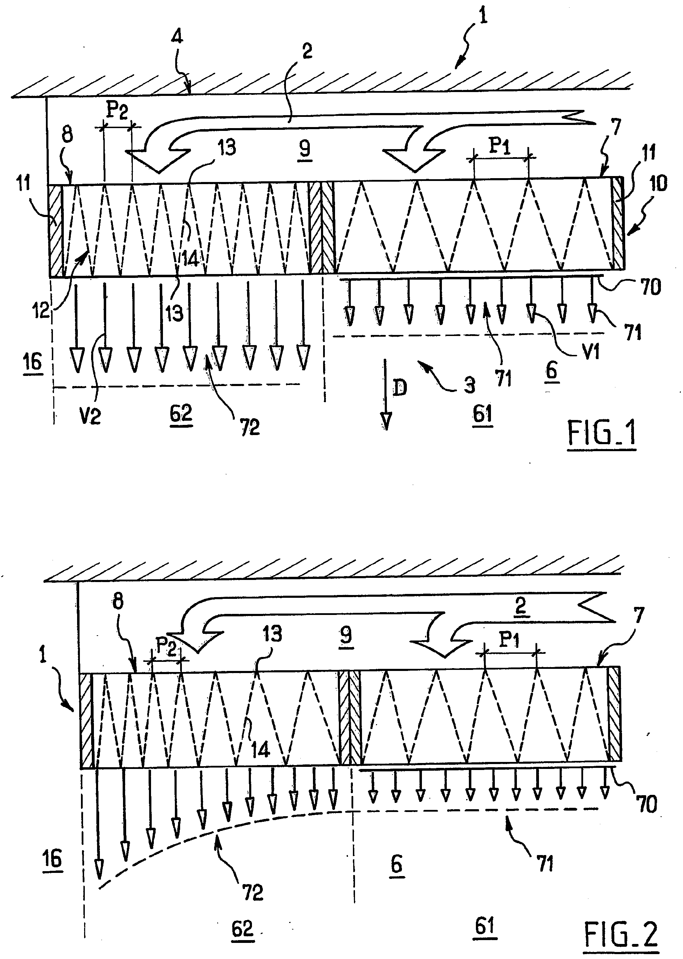

La figure 1 représente un diffuseur 1 pour un flux d'air 2,3. Le dispositif 1 est disposé sous le plafond 4 d'une salle, au-dessus d'un volume 6 à protéger. Il comprend principalement une paroi diffusante 10 sensiblement horizontale formant entre elle et le plafond 4 un volume amont 9, dans lequel un flux d'air amont 2 est amené à l'amont de la paroi filtrante. Outre une fonction de répartition de l'air à l'amont de la paroi diffusante, le volume amont 9 permet notamment l'équilibrage des pressions de l'air contre la paroi diffusante 10. Au-delà de la paroi diffusante, le flux d'air est diffusé sous forme d'un flux d'air aval 3, selon une direction de diffusion D, ici verticalement vers le bas. La paroi diffusante est en outre une paroi filtrante qui sert à émettre un flux aval débarrassé d'éventuelles poussières contenues dans le flux amont, de façon à en protéger le volume 6.

La paroi diffusante 10 comprend plusieurs caissons 7,8 jointifs. Chaque caisson comprend un cadre horizontal définissant une ouverture supérieure pour le passage du flux d'air amont, et une ouverture inférieure pour le passage du flux aval. Chaque cadre sert de support à un filtre sous une forme de feuille pliée, c'est à dire un filtre à plis 12, tel que connu de l'art antérieur. Les plis sont formés de plans 14 séparés par des pliures 13, les pliures s'étendant perpendiculairement à la direction de diffusion D, et les plans s'étendant entre une pliure supérieure et une pliure inférieure, les pliures inférieures et les pliures supérieures étant respectivement sensiblement de niveau entre elles.

De façon préférée, deux plans 14 du filtre 12, adjacents à une même pliure supérieure 13, sont symétriques par rapport à un plan contenant la direction de diffusion D, donc, dans le cas de la figure 1, symétriques à un plan médian vertical. Ainsi diffusé au travers de ces plans symétriques 14, le flux aval est diffusé selon la direction de diffusion D.

A la figure 1, deux caissons sont présentés. Un caisson principal 7 et un caisson latéral 8.

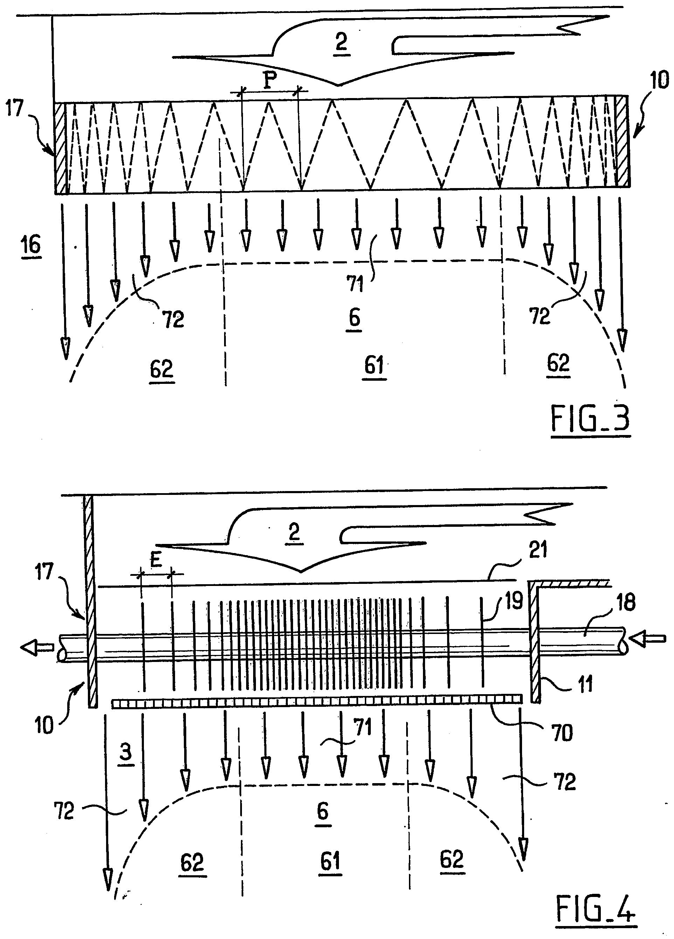

Le caisson principal est destiné a diffuser une partie du flux aval 3 sous la forme d'un flux principal 71 laminaire ou unidirectionnel, c'est à dire un flux relativement lent ne présentant pas ou peu de turbulences, dans une zone principale 61 du volume à protéger 6. A cette fin, le caisson 7 comprend en outre un dispositif de laminarisation ou laminarisateur 70, en aval des plis 12. Comme plus particulièrement illustré à la figure 4, ce laminarisateur peut être constitué d'un redresseur en forme de nid d'abeille. Il peut aussi être un tissu dont la porosité est différente de celle de la paroi diffusante. Un tel laminarisateur permet de supprimer les micro-tourbillons en sortie de la paroi diffusante.

Le caisson latéral est disposé adjacent au caisson principal. Il est destiné à diffuser une partie du flux aval sous la forme d'un flux latéral 72, plus rapide que le flux principal 71, dans une zone latérale 61 du volume à protéger 6, entre le flux principal 71 et un milieu ambiant 16 de la salle. Ainsi, le flux principal 71 est protégé de la contamination par le milieu ambiant. En outre, le flux latéral 72 peut être franchi aisément par un opérateur qui veut accéder au volume protégé ou le quitter, et le flux latéral se reformer aisément après ce franchissement.

Afin que la vitesse V2 du flux latéral 72 soit plus grande que la vitesse V1 du flux principal 71, on augmente la surface filtrante, c'est à dire la surface des plis, pour une même section du flux aval, mesurée perpendiculairement à la direction de diffusion. A cette fin, le pas P2 entre deux plis successifs du caisson 8 est plus petit que le pas P1 entre deux plis successifs du caisson principal 7.

Les pas P1,P2 des caissons sont respectivement constants de sorte que les vitesses de diffusion V1,V2 sont sensiblement constantes. Cependant, à la frontière entre les flux latéral et principal, les vitesses étant nettement différentes, le flux latéral, plus rapide, tend à induire des turbulences dans le flux principal, ce qui n'est généralement pas souhaité.

Cet inconvénient est évité par le deuxième mode de réalisation, présenté à la figure 2. Celui-ci sera décrit en ce qu'il diffère de celui de la figure 1.

Dans l'exemple de la figure 2, la valeur du pas P2 des plis dans le caisson latéral 8 est progressivement diminuée, à partir de la valeur du pas P1 des plis du caisson principal 7, à mesure que l'on s'éloigne du caisson principal. Ainsi, la valeur de la vitesse V2 du flux latéral 72 est progressivement accrue, à partir de la valeur de la vitesse V1 du flux principal, à mesure que l'on s'éloigne du flux principal. Ainsi, il n'y a sensiblement pas de palier de vitesse, ce qui limite les phénomènes d'induction, notamment l'induction de turbulences entre le flux principal et le flux latéral.

L'exemple de la figure 3 présente un troisième mode de réalisation d'un dispositif de diffusion selon l'invention. Dans cet exemple, au lieu d'utiliser plusieurs caissons disposés l'un à côté de l'autre, on utilise un caisson unique 17 permettant de diffuser à la fois un flux principal central, et, de part et d'autre du flux central, des flux latéraux progressivement accélérés. A cette fin, les plis de l'unique caisson ont un pas P de valeur constante dans la zone pour la diffusion du flux principal puis progressivement diminuée à mesure que l'on s'éloigne de part et d'autre de la zone pour la diffusion du flux principal.

On peut disposer plusieurs caissons de ce type de sorte que les flux latéraux de chacun d'eux soient alignés de façon à former couloir dans lequel sont diffusés les flux centraux. Un tel dispositif de diffusion peut être utilisé pour protéger un volume 6 dans la longueur duquel s'étend une chaîne de fabrication, notamment une chaîne de fabrication pour des produits par exemple alimentaires, pharmaceutiques ou électroniques.

L'exemple de la figure 4 présente un quatrième mode de réalisation qui n'est pas selon l'invention. Contrairement aux modes de réalisation précédents, celui-ci n'utilise pas de filtre à plis pour former la paroi diffusante. Dans cet exemple, la paroi de diffusion comprend un caisson unique 17. Le caisson est formé d'un cadre parcouru horizontalement par un tuyau 18 pour un fluide caloporteur. Le tuyau est équipé d'ailettes 19 planes et verticales, formant ainsi un échangeur à ailettes.

Pour faire varier la vitesse du flux diffusé au-delà de l'échangeur, on fait varier la perte de charge au passage de l'échangeur. A cette fin, dans l'exemple de la figure 4, on fait varier la distance E entre deux ailettes voisines. Dans une zone centrale pour diffuser le flux principal 71, la distance E a une valeur constante relativement faible et les ailettes sont relativement serrées de sorte que la vitesse du flux principal 71 est relativement faible et sensiblement constante. Dans des zones latérales, de part et d'autre de la zone centrale, la distance E est progressivement accrue de sorte que les pertes de charges au travers de l'échangeur sont progressivement diminuées, et la valeur de la vitesse du flux latéral progressivement accrue, à mesure où l'on s'éloigne de la zone centrale, respectivement du flux principal.

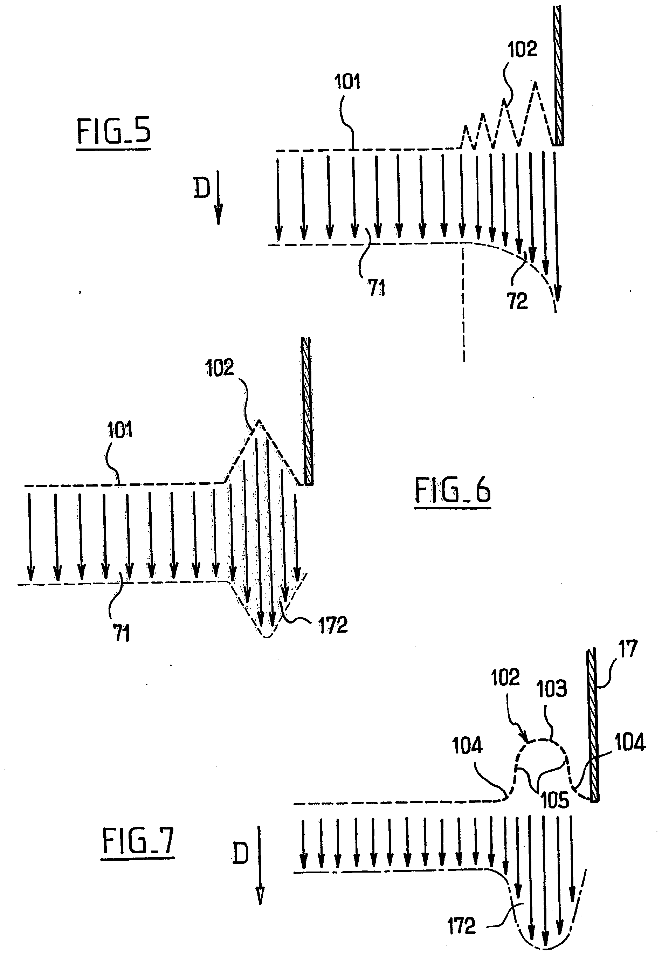

Comme illustré aux figures 5 à 7, la paroi diffusante peut comprendre un filtre dont une zone principale 101 est plane et s'étend perpendiculairement à la direction de diffusion D.

A la figure 5, qui n'est pas selon l'invention, une zone latérale 102 du filtre, adjacente à la zone principale 101, est formée en plusieurs plis, au nombre de quatre dans l'exemple illustré. Ces plis s'étendent vers l'amont relativement à la zone principale. La profondeur des plis augmente à mesure que l'on s'éloigne de la zone principale plane 101, de sorte que le flux latéral 72 est progressivement accéléré à mesure que l'on s'éloigne du flux principal 71.

A la figure 6, qui n'est pas selon l'invention, au lieu de plusieurs plis, la zone latérale 102 ne comprend qu'un seul pli profond. Un jet latéral 172 est ainsi produit.

A la figure 7, qui n'est pas selon l'invention, le pli de la figure 6 a la forme d'une onde, c'est à dire qu'au lieu de deux surfaces planes en vis à vis, séparées par une pliure, l'onde comprend des parois 105 en vis à vis, ici sensiblement parallèles à la direction de diffusion, reliées entre elles par un raccordement courbe 103, ici sensiblement semi-cylindrique, et reliées respectivement à la zone principale 101 et au caisson 17, par des raccordements courbes 104, formant ici sensiblement des portions de cylindres. Ainsi, on obtient un jet latéral 172 plus progressivement accéléré et décéléré, ce qui limite la formation de turbulences.

Bien sûr, l'invention n'est pas limitée aux exemples qui viennent d'être décrits et de nombreux aménagements peuvent être apportés à ces exemples sans sortir du cadre de l'invention.

Ainsi, la paroi diffusante peut être constitué de divers matériaux poreux, notamment un tissus et/ou une tôle perforée.

En particulier, au lieu de l'air on peut utiliser, pour le flux, un gaz ou un mélange gazeux différent, par exemple un gaz neutre. Le flux gazeux peut en outre comprendre un aérosol.

Dans le cas d'un filtre à plis, au lieu que l'augmentation de surface filtrante par section de flux soit réalisée en resserrant les plis, c'est à dire en diminuant le pas entre deux plis consécutifs, elle peut être réalisée en augmentant la distance entre deux pliures consécutives, le pas pouvant rester inchangé.

Dans le cas d'un échangeur à ailettes, au lieu que l'augmentation de perte de charge par section de flux soit réalisée en resserrant les ailettes, c'est à dire en diminuant la distance entre deux ailettes voisines, elle peut être réalisée en augmentant la surface des ailettes, par exemple leur dimension selon la direction de diffusion, la distance entre deux ailettes voisines pouvant rester constante.

Le nombre des caissons latéraux et/ou principaux n'est pas limité. Il peut être adapté à la forme et aux dimensions du volume à protéger. En particulier, un caisson latéral peut être utilisé partout où l'on ne souhaite pas protéger le flux principal avec l'aide d'une paroi solide. On peut aussi remplacer un ou plusieurs caissons principaux et un ou plusieurs caissons latéraux par un caisson mixte.

On peut encore combiner plusieurs modes de réalisation, par exemple un caisson principal comprenant un échangeur a ailettes, et un caisson latéral comprenant un filtre à plis, ou le contraire.

On peut prévoir que les flux latéraux alternent avec des flux lents, afin, par exemple de séparer des zones dans lesquelles l'air est maîtrisé différemment. Ainsi, une zone dans laquelle un flux lent où l'air est humidifié, peut être séparée par un flux rapide d'une zone où un flux d'air est seulement dépoussiéré.

Au lieu d'une diffusion selon une direction verticale, la diffusion peut se faire selon toute autre direction, notamment horizontalement.

Les formes des différents éléments peuvent encore varier, notamment celles des caissons, des plis, de l'échangeur et de ses ailettes.

Avantageusement, on peut disposer en vis à vis des flux principaux et latéraux des moyens d'aspiration de ces flux, notamment dans le cas de risques de contamination de l'environnement.

## Revendications

1. Diffuseur (1) d'un flux gazeux selon une direction principale (D), ledit flux gazeux (3) comprenant un flux principal (71) ayant une vitesse principale, et à la périphérie du flux principal, un flux latéral ayant une vitesse périphérique supérieure à la vitesse principale, ledit diffuseur comprenant au moins deux paires de surfaces (14,105) en vis à vis, une partie du flux étant diffusé entre les deux surfaces d'une paire, lesdites surfaces s'étendant principalement selon la direction principale certaines au moins des surfaces étant des surfaces aval d'une paroi de diffusion au travers de laquelle est émise une partie respective du flux gazeux, ladite paroi formant des plis, la direction principale étant sensiblement parallèle à une médiane des plis, la zone d'émission du flux principal comprenant plusieurs plis, **caractérisé en ce que** lesdits plis ont un pas (P1) et une profondeur constance, les plis ayant dans la zone d'émission du flux latéral un pas (P2) plus petit que dans la zone d'émission du flux principal, les plis étant formés de plans (14) séparés de pliures (13).

2. Diffuseur selon la revendication 1, **caractérisé en ce que** la paroi de diffusion a une porosité constante,

3. Diffuseur selon la revendication 1 ou 2, **caractérisé en ce que** la paroi de diffusion comprend un matériau poreux, notamment une tôle perforée et/ou un textile.

4. Diffuseur selon la revendication 1 ou 2, **caractérisé en ce que** la paroi de diffusion constitue un filtre, notamment un filtre absolu dit filtre à petits plis ou un filtre absolu à plis profonds.

5. Diffuseur selon l'une quelconque ders revendications précédentes, **caractérisé en ce que** dans la zone d'émission du flux latéral le pas des plis diminue progressivement à partir de la valeur du pas dans la zone d'émission du flux principal, à mesure où l'on s'éloigne de ladite zone d'émission du flux principal.

6. Diffuseur selon l'une des revendications précédentes, **caractérisé en ce que** dans la zone d'émission du flux latéral les plis ont une profondeur plus grande que dans la zone d'émission du flux principal.

7. Diffuseur selon la revendication 6, **caractérisé en ce que** dans la zone d'émission du flux latéral la profondeur des plis augmente progressivement à partir de la valeur de la profondeur dans la zone d'émission du flux principal, à mesure où l'on s'éloigne de ladite zone d'émission du flux principal.

8. Diffuseur selon l'une des revendications précédentes, **caractérisé en ce que** le diffuseur est constitué de modules élémentaires (7,8), ayant notamment la forme de caissons, des premiers modules pouvant être assemblés pour former une zone de diffusion du flux principal, des deuxièmes modules pouvant être assemblés pour former en périphérie des premiers, une zone de diffusion du flux d'air latéral.

9. Diffuseur selon la revendication 8, **caractérisé en ce que** chaque deuxième module a des caractéristiques constantes, notamment un pas ou une profondeur constante.

10. Diffuseur selon la revendication 9, **caractérisé en ce que** chaque deuxième module a au moins une caractéristique variable, notamment un pas ou une profondeur variable.

11. Diffuseur selon l'une des revendications précédentes, **caractérisé en ce qu'**il est adapté pour diffuser un flux sensiblement laminaire, au moins à une certaine distance à partir dudit diffuseur.

12. Diffuseur selon l'une des revendications précédentes, **caractérisé en ce qu'**il est adapté pour diffuser un flux d'air maîtrisé.

13. Diffuseur selon l'une des revendications précédentes, **caractérisé en ce qu'**il comprend au moins deux flux principaux séparés par au moins un flux latéral plus rapide.

14. Diffuseur selon l'une des revendications précédentes, **caractérisé en ce qu'**il comprend en outre, en aval, un laminarisateur (70).

## Patentansprüche

1. Diffusor (1) für einen Gasstrom in einer Hauptrichtung (D), wobei der Gasstrom (3) einen Hauptstrom (71) mit einer Hauptströmungsgeschwindigkeit und am Umfang des Hauptstroms einen Seitenstrom mit einer Umfangsströmungsgeschwindigkeit, die höher als die Hauptströmungsgeschwindigkeit ist, enthält, wobei der Diffusor zumindest zwei gegenüberliegende Flächenpaare (14, 105) aufweist, wobei ein Teil des Stroms zwischen den beiden Flächen eines Flächenpaares verteilt wird, wobei die Flächen sich im Wesentlichen in die Hauptrichtung erstrecken, wobei zumindest bestimmte der Flächen solche Flächen sind, die einer Diffusionswand nachgelagert sind, durch welche ein jeweiliger Teil des Gasstroms abgegeben wird, wobei die Wand Faltungen bildet, wobei die Hauptrichtung im Wesentlichen parallel zu einer Mittellinie der Faltungen verläuft, wobei der Emissionsbereich des Hauptstroms mehrere Faltungen aufweist,
**dadurch gekennzeichnet, dass** die Faltungen eine Teilung (P1) und eine konstante Tiefe haben, wobei die Faltungen in dem Emissionsbereich des Seitenstroms eine Teilung (P2) haben, die kleiner als in dem Emissionsbereich des Hauptstroms ist, wobei die Faltungen aus Ebenen (14) gebildet sind, die durch Knickstellen (13) getrennt sind.

2. Diffusor nach Anspruch 1, **dadurch gekennzeichnet, dass** die Diffusionswand eine konstante Porosität hat.

3. Diffusor nach Anspruch 1 oder 2, **dadurch gekennzeichnet, dass** die Diffusionswand ein poröses Material enthält, insbesondere ein Lochblech und/oder einen Textilstoff.

4. Diffusor nach Anspruch 1 oder 2, **dadurch gekennzeichnet, dass** die Diffusionswand einen Filter, insbesondere einen Absolutfilter, Kleinfaltenfilter genannt, oder einen Absolutfilter mit tiefen Falten bildet.

5. Diffusor nach einem der vorangehenden Ansprüche, **dadurch gekennzeichnet, dass** in dem Emissionsbereich des Seitenstroms die Teilung der Faltungen ausgehend von dem Maß der Teilung in dem Emissionsbereich des Hauptstroms mit zunehmender Entfernung von dem Emissionsbereich des Hauptstroms progressiv abnimmt.

6. Diffusor nach einem der vorangehenden Ansprüche, **dadurch gekennzeichnet, dass** in dem Emissionsbereich des Seitenstroms die Faltungen eine größere Tiefe haben als in dem Emissionsbereich des Hauptstroms.

7. Diffusor nach Anspruch 6, **dadurch gekennzeichnet, dass** in dem Emissionsbereich des Seitenstroms die Tiefe der Faltungen ausgehend von dem Maß der Tiefe in dem Emissionsbereich des Hauptstroms mit zunehmender Entfernung von Emissionsbereich des Hauptstroms progressiv zunimmt.

8. Diffusor nach einem der vorangehenden Ansprüche, **dadurch gekennzeichnet, dass** der Diffusor aus Grundmodulen (7, 8) besteht, die insbesondere in Form von Kästen vorliegen, wobei erste Module zusammengefügt sein können, um einen Diffusionsbereich des Hauptstroms zu bilden, und wobei zweite Module zusammengefügt sein können, um am Umfang der ersten einen Diffusionsbereich des Seitenluftstroms zu bilden.

9. Diffusor nach Anspruch 8, **dadurch gekennzeichnet, dass** das zweite Modul jeweils konstante Eigenschaften hat, insbesondere eine konstante Teilung oder Tiefe.

10. Diffusor nach Anspruch 9, **dadurch gekennzeichnet, dass** das zweite Modul jeweils zumindest eine veränderliche Eigenschaft hat, insbesondere eine veränderliche Teilung oder Tiefe.

11. Diffusor nach einem der vorangehenden Ansprüche, **dadurch gekennzeichnet, dass** er dazu ausgelegt ist, einen im Wesentlichen laminaren Strom zumindest in einem bestimmten Abstand ausgehend vom Diffusor zu verteilen,.

12. Diffusor nach einem der vorangehenden Ansprüche, **dadurch gekennzeichnet, dass** er dazu ausgelegt ist, einen kontrollierten Luftstrom zu verteilen.

13. Diffusor nach einem der vorangehenden Ansprüche, **dadurch gekennzeichnet, dass** er zumindest zwei Hauptströme aufweist, die durch zumindest einen schnelleren Seitenstrom getrennt sind.

14. Diffusor nach einem der vorangehenden Ansprüche, **dadurch gekennzeichnet, dass** er ferner einen nachgelagerten Laminarisator (70) enthält.

## Claims

1. Diffuser (1) for a gaseous flow in a main direction (D), said gaseous flow (3) comprising a main flow (71) having a main velocity, and at the periphery of the main flow, a lateral flow having a peripheral velocity greater than the main velocity, said diffuser comprising at least two pairs of surfaces (14, 105) opposite each other, a portion of the flow being diffused between the two surfaces of a pair, said surfaces principally extending in the main direction, at least some of the surfaces being downstream surfaces of a diffusion wall through which a respective portion of the gaseous flow is emitted, said wall forming pleats, the main direction being substantially parallel to a median of the pleats, the zone for emitting the main flow comprising several pleats, **characterized in that** said pleats have a constant depth and spacing (P1), the pleats having, in the zone for emitting the lateral flow, a spacing (P2) that is narrower than in of the zone for emitting the main flow, the pleats being formed of planes (14) separated by folds (13).

2. Diffuser according to claim 1, **characterized in that** the diffusion wall has a constant porosity.

3. Diffuser according to claim 1 or 2, **characterized in that** the diffusion wall comprises a porous material, in particular a perforated metal sheet and/or a textile.

4. Diffuser according to claim 1 or 2, **characterized in that** the diffusion wall constitutes a filter, in particular an absolute filter called a mini-pleat filter or a deep-pleat absolute filter.

5. Diffuser according to any one of the preceding claims, **characterized in that** in the zone for emitting the lateral flow, the spacing of the pleats progressively decreases, starting from the spacing value in of the zone for emitting the main flow, as the distance from said zone for emitting the main flow increases.

6. Diffuser according to one of the preceding claims, **characterized in that** in the zone for emitting the lateral flow, the pleats have a greater depth than in the zone for emitting the main flow.

7. Diffuser according to claim 6, **characterized in that** in the zone for emitting the lateral flow, the depth of the pleats progressively increases starting from the depth value in in the zone for emitting the main flow, as the distance from said zone for emitting the main flow increases.

8. Diffuser according to one of the preceding claims, **characterized in that** the diffuser is constituted by basic modules (7,8), in particular having the form of units, by first modules capable of being assembled in order to form a zone for diffusing the main flow, and by second modules capable of being assembled in order to form, on the periphery of the first modules, a zone for diffusing the lateral air flow.

9. Diffuser according to claim 8, **characterized in that** each second module has constant characteristics, in particular a constant spacing or depth.

10. Diffuser according to claim 9, **characterized in that** each second module has at least one variable characteristic, in particular a variable spacing or depth.

11. Diffuser according to one of the preceding claims, **characterized in that** it is suitable for diffusing a substantially laminar flow, at least at a certain distance starting from said diffuser.

12. Diffuser according to one of the preceding claims, **characterized in that** it is suitable for diffusing a controlled air flow.

13. Diffuser according to one of the preceding claims, **characterized in that** it comprises at least two main flows separated by at least one faster lateral flow.

14. Diffuser according to one of the preceding claims, **characterized in that** it also comprises a downstream laminarizer (70).
